# EUROPÄISCHE PATENTSCHRIFT

(11) **EP 1 076 145 B1**
(45) Veröffentlichungstag und Bekanntmachung des Hinweises auf die Patenterteilung: **14.01.2004**
(21) Anmeldenummer: 00112721.6
(22) Anmeldetag: 15.06.2000
(51) Int. Cl.: E05F 5/02, E05F 5/10

(54) **Bremsverzögerungsvorrichtung für Türen, Fenster o. dgl.**
Braking deceleration device for doors, windows or similar
Dispositif de décélération de freinage pour portes, fenêtres ou similaires

(30) Priorität: 09.08.1999 DE 29913854 U
(43) Veröffentlichungstag der Anmeldung: 14.02.2001
(73) Patentinhaber: Arturo Salice S.p.A., I-22060 Novedrate (Como) (IT)
(72) Erfinder:
(74) Vertreter: Gossel, Hans K., Dipl.-Ing.

(56) Entgegenhaltungen:
- DE-A- 2 103 374
- DE-A- 4 134 509
- DE-C- 41 733
- DE-C- 196 492
- DE-U- 8 807 802
- FR-A- 2 586 266

## Beschreibung

Die Erfindung betrifft eine Bremsverzögerungsvorrichtung für Türen, Fenster o. dgl., bestehend aus einem gegen die Kraft einer Ausschubfeder in einen Zylinder eindrückbaren Kolben, auf dessen Kolbenstange das abzubremsende Element einwirkt.

Bremsverzögerungs- oder Dämpfungsvorrichtungen dieser Art werden beispielsweise zum Abbremsen von Türen und insbesondere von Möbeltüren kurz vor ihrer Schließstellung verwendet, um die Schlagwirkung zu mildern und ein möglichst sanftes Schließen zu gewährleisten. Bremsverzögerungsvorrichtungen werden insbesondere dann verwendet, wenn die Türen und Möbeltüren mit Schließvorrichtungen versehen sind, die diese in ihre Schließstellung drücken und in dieser halten. Bremsverzögerungsvorrichtungen der eingangs angegebenen Art können aber auch für andere Teile, insbesondere Möbelteile, beispielsweise Schubladen oder Klappen, verwendet werden, um zu verhindern, daß diese mit Wucht und störendem Geräusch in ihre Endstellung gelangen oder schlagen.

Aus DE 197 17 937 A1 ist ein Brems- und Dämpfungselement für bewegliche Möbelteile der eingangs angegebenen Art bekannt, das aus einem in einem Zylinder verschieblichen und in radialer Richtung spreizbaren Kolben besteht, der derart ausgebildet ist, daß eine durch Einschub des Kolbens erfolgte Komprimierung der Luft eine radiale Ausdehnung oder Spreitzung des Kolbens bewirkt, durch die neben dem Dämpfungseffekt durch die komprimierte Luft auch ein Bremseffekt durch Reibung des Kolbens an der Innenwand des Zylinders entsteht.

Aus DE 37 29 597 A1 ist ein Türschließdämpfer der eingangs angegebenen Art bekannt, der aus einem im Türrahmen befestigten Bremszylinder und einem Kolben mit einstückig ausgebildetem Stößel besteht, der beim Türschließen die vor dem Kolben befindliche Luft zunächst komprimiert, die nach einer Teilstrecke mittels eines durch den Kolben gleitenden und einen unterschiedlichen Durchmesser aufweisenden Zapfens dekomprimiert wird.

Aus DE-C-41 733 ist eine Bremsverzögerungsvorrichtung für Türen bekannt, die aus einem an dem Türrahmen befestigten Zylinder mit einem Kolben besteht, dessen Kolbenstange den Schlag des Anschlags aufnimmt und dadurch abschwächt, daß eine in dem Zylinder enthaltene Flüssigkeit durch einen engen Kanal oder durch ein Ringventil nach der anderen Seite gedrückt wird, während der Kolben in seine normale Lage entweder durch sein Eigengewicht oder eine Feder zurückkehrt.

Die bekannten Bremsverzögerungsvorrichtungen weisen nicht nur einen komplizierten Aufbau auf, sie erfordern auch eine Herstellung ihrer Einzelteile mit hoher Maßgenauigkeit, um die Funktion zu gewährleisten. Die Herstellung der bekannten Bremsverzögerungsvorrichtungen ist daher verhältnismäßig teuer.

Aufgabe der Erfindung ist es daher, eine Bremsverzögerungsvorrichtung der eingangs angegebenen Art zu schaffen, die sich mit verringertem Aufwand kostengünstig herstellen läßt.

Erfindungsgemäß wird diese Aufgabe durch die Merkmale des Anspruchs 1 gelöst.

Das die Brems- oder Dämpfungswirkung erzeugende, auf die Wandung des Zylinders aufgetragene Fett hoher Viskosität gehört zu den bekannten sog. "Damping Greases". Es wird auf die innere Wandung des Zylinders aufgetragen, so daß es im Innenraum zwischen der Wandung und dem Kolben die Dämpfung oder Verzögerung bewirkt. Das erfindungsgemäß verwendete Fett hoher Viskosität kann zusätzlich zum klebenden Polymer aus einem Grundöl hoher Viskosität und aus synthetischen Kohlenwasserstoffen mit hoher Viskosität bestehen, so daß es zwischen dem Kolben und dem Zylinder bei einer Bewegung die gewünschte Reibungskraft erzeugt.

Da das erfindungsgemäß verwendete Fett hoher Viskosität als Bestandteil auch ein klebendes Polymer enthält, haftet dieses gut an der Wandung des Zylinders, ohne in einer Weise verdrängt zu werden, daß es seine bremsende Wirkung nicht mehr erzeugen könnte. Weiterhin befindet sich zwischen der Wandung des Zylinders und dem Kolben ein so großes Spiel, daß das Fett die Wirkung einer Gleitführung entfaltet, ohne in einem nennenswerten Ausmaß verdrängt zu werden.

Weiterhin besteht die Wandung des Zylinders aus einer unebenen Fläche, die beispielsweise Vertiefungen in einem vorgegebenen Muster aufweist und eine unerwünschte Verlagerung des Fettes verhindert.

Das erfindungsgemäß verwendete Fett hoher Viskosität bietet außer einem Staubschutz auch eine wirksame Abdichtung so daß auf den Einsatz zusätzlicher Dichtungsmittel oder Dichtungseinrichtungen verzichtet werden kann.

Zweckmäßigerweise ist die Wandung des Zylinders mit ring- oder wendelförmigen Riefen oder Nuten versehen, die eine unerwünschte Verlagerung des Fettes verhindern.

Statt der Wandung des Zylinders oder zusätzlich zu der Wandung des Zylinders kann auch die Umfangsfläche des Kolbens mit ring- oder wendelförmigen Riefen oder Nuten versehen sein oder Unebenheiten aufweisen.

Der Zylinder kann durch einen Deckel, z.B. durch einen Schraubstopfen, verschlossen sein. Dieser Schraubstopfen bildet den Boden des Zylinders, zwischen dem und dem Kolben die Ausschubfeder eingespannt ist. Die durch eine Druckfeder gebildete Ausschubfeder kann sehr schwach ausgelegt sein und die Kraft dieser Feder wird im geschlossenen Zustand beispielsweise einer Tür durch deren Schließmechanismus überwunden. Entsprechend der nur schwach ausgelegten Ausschubfeder erfolgt die Ausschubbewegung des Kolbens entsprechend langsam.

Der den Zylinder schließende Deckel kann mit einer Entlüftungsbohrung versehen sein, die eine sanftere Bewegung des Kolbens ermöglicht.

Die Kolbenstange durchsetzt zweckmäßigerweise eine Bohrung der Stirnwand des Zylinders, wobei die Ringstufe zwischen dem Bohrungsrand und der Zylinderwandung einen Anschlag für den Kolben bildet.

Ein Ausführungsbeispiel der Erfindung wird nachstehend anhand der Zeichnung näher erläutert. In dieser zeigt
- Fig. 1: einen Längsschnitt durch den Zylinder der Bremsverzögerungsvorrichtung mit im ausgeschobenen Zustand befindlichen Kolben,
- Fig. 2: eine der Fig. 1 entsprechende Darstellung, in der der Kolben vollständig in den Zylinder eingedrückt ist,
- Fig. 3: eine Seitenansicht des den Zylinder bodenseitig verschließenden Stopfens,
- Fig. 4: einen Längsschnitt durch den Zylinder,
- Fig. 5: eine Seitenansicht des Kolbens mit Kolbenstange,
- Fig. 6: eine Seitenansicht des auf die Kolbenstange aufgesetzten Kopfes,
- Fig. 7: einen Schnitt durch den oberen Eckbereich eines Schrankes mit in eine Bohrung der Deckwand eingesetzter Bremsverzögerungsvorrichtung bei geöffneter Tür und
- Fig. 8: eine der Fig. 7 entsprechende Darstellung im geschlossenen Zustand der Tür.

Die Bremsverzögerungsvorrichtung besteht aus einem Zylinder 1, in dem ein Kolben 2 mit einstückig angeformter Kolbenstange 3 axial verschieblich geführt ist. Zur Verbesserung der Führungs- und Reibeigenschaften weist der Kolben 2 vorzugsweise eine axiale Länge auf, die etwa der Hälfte der Länge des Zylinders 1 entspricht. Unter einer einstückigen Herstellung ist zu verstehen, daß der Kolben 2 und die Kolbenstange 3 in einem Vorgang, beispielsweise durch Spritzgießen oder Formpressen, hergestellt sind. An den Kolben 2 ist ein Zapfen 4 und an die Kolbenstange 3 ein Zapfen 5 angeformt. Der Zapfen 5 dient dem Aufstecken eines Kopfes 6, der aus einem elastomerem Material, beispielsweise Kunststoff, bestehen kann.

Die Kolbenstange 3 durchsetzt eine Bohrung 7 in der Stirnwand des Zylinders 1, wobei zwischen dem Bohrungsrand und der Innenwandung 8 des Zylinders eine Ringstufe gebildet ist, die einen Anschlag für den Kolben 2 bildet.

Bodenseitig ist der Zylinder 1 mit einem Innengewinde 9 versehen, in das der mit einem Außengewinde versehene Schraubstopfen 10 einschraubbar ist. Der Schraubstopfen 10 weist auf seiner Innenseite einen Zapfen 11 auf, wobei die Zapfen 4, 11 der Halterung einer Druckfeder 12 dienen, die zwischen dem Schraubstopfen 10 und dem Kolben 2 eingespannt ist.

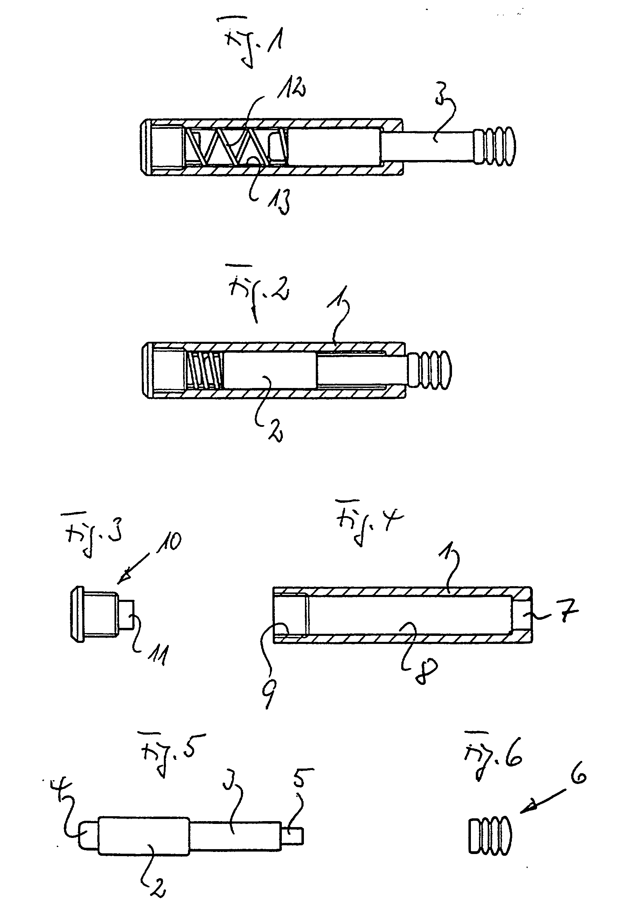

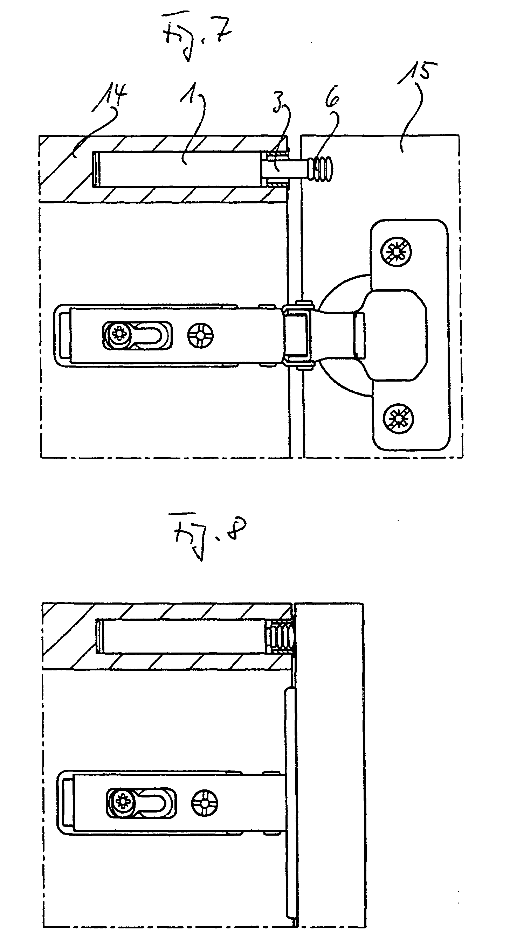

Die Innenwandung 8 des Zylinders 1 und/oder die Umfangsfläche des Kolbens 2 sind in nicht dargestellter Weise mit ring- oder wendelförmigen Riefen oder Nuten oder mit Vertiefungen versehen. Auf die Innenwandung 8 des Zylinders 1 ist ein Fett hoher Viskosität aufgetragen. Diese Fettschicht ist in Fig. 1 durch die Doppellinie 13 angedeutet worden. Diese Fettschicht bewirkt die Erhöhung der Reibung zwischen dem Kolben 2 und dem Zylinder 1, die proportional mit der Geschwindigkeit der Bewegung des Kolbens 2 in dem Zylinder 1 zunimmt. Ist der Kolben 2 in der aus Fig. 2 ersichtlichen Weise vollständig in den Zylinder 1 eingeschoben, vermag die Druckfeder 12 bei Entlastung des Kolbens diesen mit relativ langsamer Geschwindigkeit wieder auszuschieben.

Die Riffelungen der Innenwand des Zylinders und des Kolbens sowie etwaige Unebenheiten dienen dazu, eine Verlagerung des Fetts zu verhindern.

Fig. 7 zeigt ein Ausführungsbeispiel, bei dem der Zylinder 1 der Dämpfungsvorrichtung in eine stirnseitige Bohrung in der Deckwand 14 eines Schranks eingesetzt ist. Beim Schließen der Tür 15 stößt diese auf den Kopf 6 der Dämpfungsvorrichtung in ihrem Schließbereich, so daß der Kolben 2 unter Entfaltung seiner Dämpfungswirkung in den Zylinder 1 eingedrückt wird und ein unerwünschtes Zuschlagen der Tür 15 verhindert. Ist das die Tür 15 tragende Scharniergelenk mit einer Schließvorrichtung versehen, vermag diese die Kraft der Ausschubfeder 12 zu überwinden.

Aus Fig. 8 ist die Schließvorrichtung mit eingedrücktem Kolben im geschlossenen Zustand der Tür zu sehen.

## Patentansprüche

1. Bremsvorrichtung für Türen (15), Fenster oder bewegliche Möbelteile, bestehend aus einem gegen die Kraft einer Ausschubfeder (12) in einen Zylinder (1) eindrückbaren Kolben (2), auf dessen Kolbenstange (3) das abzubremsende Element einwirkt,
**dadurch gekennzeichnet,**
**dass** auf die Wandung (8) des Zylinders (1) ein Fett (13) mit hoher Viskosität aufgetragen ist, dass als Bestandteil ein klebendes Polymer enthält und
**dass** die Wandung (8) des Zylinders (1) eine unebene Fläche aufweißt.

2. Bremsverzögerungsvorrichtung nach Anspruch 1, **dadurch gekennzeichnet, daß** die Wandung (8) des Zylinders (1) mit ring- oder wendelförmigen Riefen oder Nuten versehen ist.

3. Bremsverzögerungsvorrichtung nach Anspruch 1 oder 2, **dadurch gekennzeichnet, daß** die Umfangsfläche des Kolbens (2) mit ring- oder wendelförmigen Riefen versehen ist oder andere Unebenheiten aufweist.

4. Bremsverzögerungsvorrichtung nach einem der Ansprüche 1 bis 3, **dadurch gekennzeichnet, daß** der Zylinder (1) durch einen Deckel, z.B. einem Schraubstopfen (10), verschlossen ist.

5. Bremsverzögerungsvorrichtung nach einem der Ansprüche 1 bis 4, **dadurch gekennzeichnet, daß** der Deckel (10) mit einer Entlüftungsbohrung versehen ist.

6. Bremsverzögerungsvorrichtung nach einem der Ansprüche 1 bis 5, **dadurch gekennzeichnet, daß** die Kolbenstange (3) eine Bohrung der Stirnwand des Zylinders (1) durchsetzt.

7. Bremsvorrichtung nach einem der Ansprüche 1 bis 6, **dadurch gekennzeichnet, daß** zwischen dem Boden des Zylinders (1) und dem Kolben (2) eine Druckfeder eingespannt ist.

## Claims

1. A braking device for doors (15), windows or movable furniture parts, consisting of a piston (2) that can be pressed into a cylinder (1) against the force of a pressure spring (12), wherein the element to be decelerated acts upon the piston rod (3) of said piston,
**characterized in that**
a high-viscosity grease (13) which contains a viscid polymer is applied onto the wall (8) of the cylinder (1),
and **in that** the wall (8) of the cylinder (1) has an uneven surface.

2. The braking deceleration device according to Claim 1, **characterized in that** the wall (8) of the cylinder (1) is provided with annular or helical furrows or grooves.

3. The braking deceleration device according to Claim 1 or 2, **characterized in that** the circumferential surface of the piston (2) is provided with annular or helical furrows or contains other surface irregularities.

4. The braking deceleration device according to one of Claims 1-3, **characterized in that** the cylinder (1) is closed with a cover, e.g., a screw-type plug (10).

5. The braking deceleration device according to one of Claims 1-4, **characterized in that** the cover (10) is provided with a ventilation bore.

6. The braking deceleration device according to one of Claims 1-5, **characterized in that** the piston rod (3) extends through a bore in the end face of the cylinder (1).

7. The braking device according to one of Claims 1-6, **characterized in that** a pressure spring is braced between the bottom of the cylinder (1) and the piston (2).

## Revendications

1. Dispositif de freinage pour portes (15), fenêtres ou parties de meuble mobiles, comprenant un piston (2) pouvant être enfoncé contre la force d'un ressort d'expulsion (12) dans un cylindre (1), piston sur la tige duquel (3) l'élément à freiner agit,
**caractérisé en ce que**
une graisse (13) avec une viscosité élevée est appliquée sur la paroi (8) du cylindre (1), graisse qui contient un polymère adhésif comme composant et **en ce que** la paroi (8) du cylindre (1) présente une surface inégale.

2. Dispositif de décélération de freinage selon la revendication 1, **caractérisé en ce que** la paroi (8) du cylindre (1) est pourvue de stries ou de rainures de forme annulaire ou hélicoïdale.

3. Dispositif de décélération de freinage selon la revendication 1 ou 2, **caractérisé en ce que** la surface périphérique du piston (2) est pourvue de stries de forme annulaire ou hélicoïdale ou présente d'autres aspérités.

4. Dispositif de décélération de freinage selon l'une quelconque des revendications 1 à 3, **caractérisé en ce que** le cylindre (1) est fermé par un couvercle, par exemple un bouchon à vis (10).

5. Dispositif de décélération de freinage selon l'une quelconque des revendications 1 à 4, **caractérisé en ce que** le couvercle (10) est pourvu d'un alésage de ventilation.

6. Dispositif de décélération de freinage selon l'une quelconque des revendications 1 à 5, **caractérisé en ce que** la tige de piston (3) traverse un alésage de la paroi avant du cylindre (1).

7. Dispositif de freinage selon l'une quelconque des revendications 1 à 6, **caractérisé en ce qu'**un ressort de pression est monté entre le fond du cylindre (1) et le piston (2).
